# FASCICULE DE BREVET EUROPEEN

(11) **EP 2 791 534 B1**
(45) Date de publication et mention de la délivrance du brevet: **20.07.2016**
(21) Numéro de dépôt: 12809221.0
(22) Date de dépôt: 14.12.2012
(51) Int. Cl.: F16D 55/226, F16D 65/097

(54) **RESSORT RADIAL DE PATIN DE FREIN A DISQUE ET PATINS DE FREIN AINSI QUE FREINS EQUIPES DE TELS RESSORTS RADIAUX**
RADIALFEDER FÜR EINEN SCHEIBENBREMSBELAG UND MIT SOLCHEN RADIALFEDERN AUSGESTATTETE BREMSBELÄGE
RADIAL SPRING FOR A DISC BRAKE PAD AND BRAKE PADS AND BRAKES PROVIDED WITH SUCH RADIAL SPRINGS

(30) Priorité: 15.12.2011 FR 1103874
(43) Date de publication de la demande: 22.10.2014
(73) Titulaire: Robert Bosch GmbH, 70442 Stuttgart (DE)
(72) Inventeur: BERNARD, Simon, 94170 Le Perreux/Marne (FR); MERRIEN, Sandra, 94120 Fontenay Sous Bois (FR); MAHOUDEAUX, Roger, 93150 Le Blanc Mesnil (FR)
(86) Numéro de dépôt international: PCT/EP2012/075581
(87) Numéro de publication internationale: WO 2013/087856

(56) Documents cités:
- EP-A1- 2 072 850
- WO-A1-2011/062160
- US-A1- 2008 135 353

## Description

### Domaine de l'invention

La présente invention concerne un ressort radial de patin de frein destiné à être glissé transversalement sur l'oreille d'un patin de frein à disque, le ressort formé par un ruban d'acier à ressort comportant des branches pour se fixer sur l'oreille et une partie d'appui, pour glisser contre la surface inférieure du logement du bras de la chape.

L'invention concerne également les patins de frein ainsi que les freins à disque équipés de tels ressorts radiaux.

### Etat de la technique

On connaît de tels ressorts notamment selon le brevet EP 2 072 850. Mais les ressorts décrits dans ce document sont relativement encombrants et leur mouvement de glissement dans le logement de la chape n'est pas toujours régulier dans les deux sens de déplacement du patin lors d'une opération de freinage et du retour après le freinage.

### But de l'invention

La présente invention a pour but de perfectionner les ressorts de guidage d'oreille de patin de frein pour faciliter leur montage sur les oreilles et l'installation du patin dans la chape ; elle a aussi pour but d'améliorer la souplesse du guidage et la régularité de celui-ci, en particulier pour obtenir la sensibilité très poussée requise pour le retour du patin de frein en position hors contact du disque sans nécessiter une course importante préjudiciable pour le temps de réponse du frein.

### Exposé et avantages de l'invention

A cet effet, l'invention concerne un ressort de guidage du type défini ci-dessus caractérisé en ce qu'il comprend
- une partie en forme de pince pour chevaucher l'oreille du patin, prolongée par une boucle d'appui formant un patin pour glisser dans le logement de la chape,
- la pince ayant
   * une branche fixe, droite, avec une extrémité évasée pour s'appuyer contre une face de l'oreille, suivie
      * d'un segment formant le fond de la pince, et
   * une branche mobile reliée au fond par une charnière élastique et refermant l'ouverture de la pince,
- la boucle d'appui formant le patin étant terminée par un retour et reliée par un double cintrage à la branche mobile pour contourner élastiquement le fond et venir devant la branche droite par le retour,
- le patin formant un levier qui, ramené élastiquement contre le fond, agrandit l'ouverture de la pince.

Cette forme de ressort radial tant au niveau de la pince qu'au niveau de la boucle facilite considérablement l'installation de la pince sur l'oreille du patin et ensuite l'introduction de l'oreille munie de ce ressort radial dans le logement du bras de la chape. Une fois le ressort radial installé, sa forme assure un bon appui du dessus de l'oreille contre la surface radiale extérieure du logement du bras tout en participant au maintien de l'oreille et par suite du patin, parallèle à lui-même au cours de son mouvement de translation lors du freinage et du retour à la fin du freinage.

La surface de guidage importante constituée par le patin réduit les frottements et favorise la souplesse du glissement pour les mouvements de freinage et de retour.

Suivant une autre caractéristique avantageuse, le fond de la pince est formé par une ondulation composée d'un premier cintrage, concave par rapport à l'intérieur de la pince suivie d'une ondulation convexe formant un sommet suivi d'un cintrage formant l'articulation avec la branche mobile, le sommet constituant la surface d'appui de la pince contre le dessous de l'oreille.

Suivant une autre caractéristique avantageuse, la branche mobile a une forme de Z englobant le cintrage reliant la branche au fond et le cintrage reliant l'autre extrémité de la branche mobile à un segment droit lui-même relié à l'autre cintrage de la boucle.

Cette forme de Z de la branche mobile favorise l'engagement de la pince sur l'oreille et ensuite la stabilité de la tenue de la pince sur l'oreille au cours des mouvements de translation du patin par rapport au bras.

Suivant une autre caractéristique, le second cintrage de la boucle d'appui forme l'arrondi de guidage à l'avant du ressort radial installé sur l'oreille du patin, pour l'introduction de l'oreille ainsi équipée dans le logement du bras.

Le second cintrage forme une partie très arrondie évitant l'accrochage de l'oreille au moment de l'introduction dans le logement du bras.

Suivant une autre caractéristique avantageuse, le patin de la boucle d'appui a une forme courbe avec un grand rayon de courbure.

Suivant une autre caractéristique avantageuse, le premier cintrage a un rayon de courbure sensiblement double du rayon du cintrage reliant le fond à la branche droite de la pince et du rayon du cintrage reliant la branche mobile au fond et le second cintrage a un rayon sensiblement double du rayon du premier cintrage de la boucle.

Enfin et comme déjà indiqué, l'invention concerne les patins de frein équipés de tels ressorts radiaux sur chacune de leurs oreilles et un frein à disque dont les patins de frein sont équipés de tels ressorts radiaux.

### Dessins

La présente invention sera décrite ci-après à l'aide d'un exemple de réalisation d'un ressort de guidage de patin de frein représenté dans les dessins annexés dans lesquels :
- la figure 1 est une vue de face d'une chape de frein à disque montrant une partie de patin de frein avec son oreille engagée dans le logement d'un bras de la chape par l'intermédiaire d'un ressort radial,
- la figure 2 est une vue isométrique du ressort radial en position non serrée selon l'invention,
- la figure 3 est une vue de côté d'un ressort radial de patin de frein selon l'invention,
- la figure 4 est une vue schématique de face montrant le ressort radial selon l'invention engagé sur l'oreille d'un patin de frein et prenant appui contre la surface inférieure du logement de la chape du frein.

### Description d'un mode de réalisation de l'invention

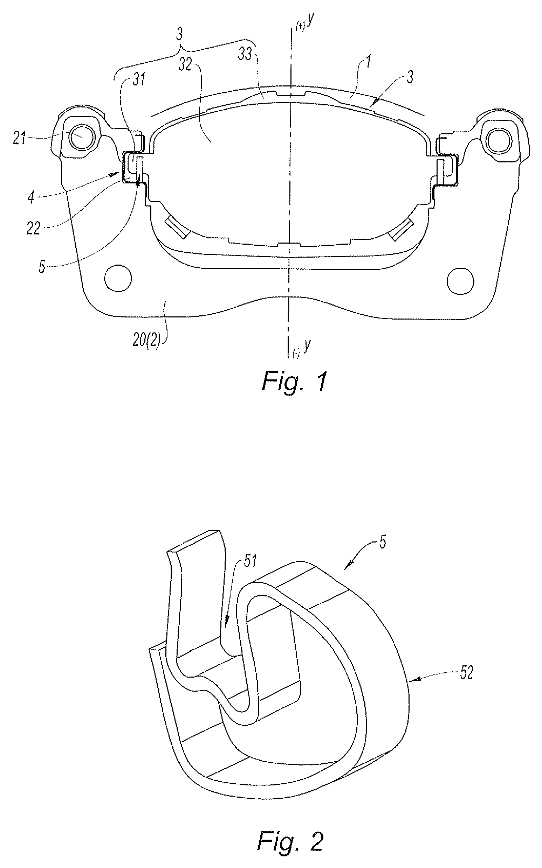

Selon la figure 1, l'invention concerne un frein à disque dont la partie à laquelle s'applique l'invention est représentée schématiquement.

Le frein à disque coopère avec un disque 1 et se compose d'un étrier non représenté portant une chape 2 elle-même formée de deux bras parallèles 20, chacun en forme de U très aplati, et reliés par des colonnettes 21. Chaque extrémité d'un bras 20 comporte un logement de guidage 22 dirigé axialement et muni d'un organe de guidage 4 ; chaque logement reçoit une oreille 31 du patin 3, munie d'un ressort radial 5.

Les patins de frein 3 sont en fait constitués par un support de garniture 30, en métal, muni des deux oreilles 31 servant à sa fixation dans les bras 20 de la chape 2 et ce support de garniture 30 porte la garniture de frein 32 destinée à s'appliquer contre une face du disque 1. Les deux patins 3 sont actionnés dans la direction axiale perpendiculaire au plan de la figure 1 pour serrer le disque et le freiner. Au cours de ce mouvement de freinage et pour le mouvement de retour en position dégagée, les patins de frein 3 se déplacent dans le logement 22 des bras 20 de la chape en étant appuyés contre le dessus du logement 22 et guidés par le ressort radial 5. Ce ressort radial 5 est globalement dans un plan perpendiculaire au plan de la figure 1.

A la figure 1, le disque de frein est parallèle au plan de la figure et l'axe du disque de frein 1 est perpendiculaire au plan de la figure.

La figure 2 est une vue isométrique d'un ressort radial 5 selon l'invention pour être engagé sur une oreille 31 du patin de frein de la figure 1 pour tenir l'oreille 31 dans le logement 22 et lui permettre de glisser suivant l'actionnement du frein.

Le ressort radial 5 est constitué par un ruban en acier à ressort cintré suivant différents rayons de courbure de manière à constituer une pince 51 qui se glisse transversalement et par en dessous sur l'oreille 31 du patin. La pince 51 se poursuit par une boucle 52 servant d'appui dans le logement 22 de la chape pour guider l'oreille. Cette boucle 52 facilite également la mise en place du ressort 5 sur l'oreille 31 et ensuite l'installation du patin de frein 3 dans chacun des deux logements 22 de la chape 2.

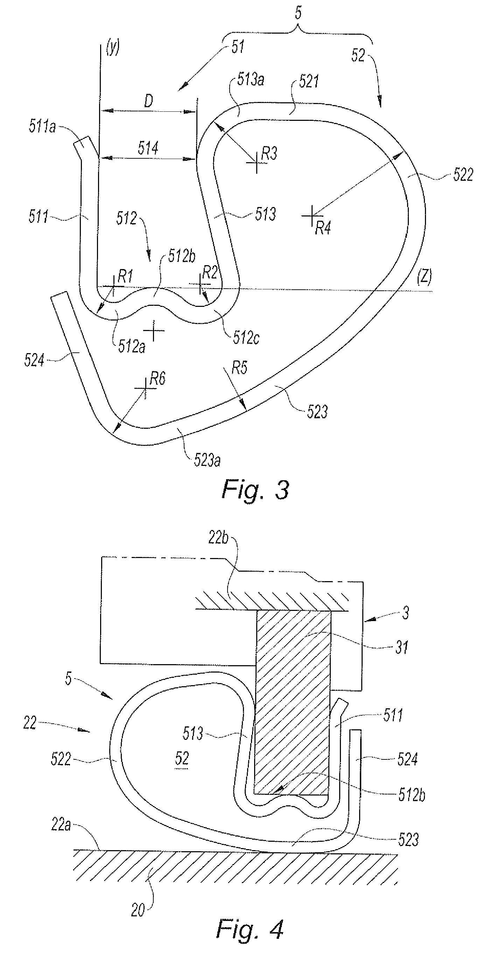

Pour faciliter la description, la figure 3 comporte le tracé de deux axes perpendiculaires, définissant en quelque sorte un repère orthogonal d'axe (Z) horizontal et d'axe (Y) vertical.

Cette orientation correspond sensiblement à l'orientation du ressort 5 installé sur l'oreille d'un patin de frein en utilisant comme convention d'orientation, la direction radiale c'est-à-dire une direction passant par l'axe du disque de frein qui correspond sensiblement à la direction (Y), et la direction axiale (Z) parallèle à l'axe du disque de frein, et ainsi perpendiculaire au patin de frein (figure 1). Le patin est parallèle à la surface du disque et l'oreille à chaque extrémité est dans la direction perpendiculaire au plan YZ.

Selon l'orientation de la figure 1, le côté extérieur du disque de frein est situé du côté haut (+Y) et le centre du disque de frein est situé en bas du côté intérieur dans la direction (-Y) de l'axe (Y).

Selon la figure 3, le ressort radial 5 réalisé à partir d'un ruban d'acier à ressort, cintré, se compose d'une première partie constituant la pince 51 destinée à être engagée sur l'oreille du patin de frein et se poursuivant par la boucle d'appui 52 formant un patin et un levier d'actionnement.

La pince 51 est formée par une branche 511 qui, par convention, est appelée branche fixe. Elle est droite, parallèle à l'axe OY et se termine par une extrémité évasée 511a.

La branche fixe 511 est reliée par un cintrage 512a à un segment ondulé 512 formant un sommet 512b constituant le fond de la pince 51. Le segment ondulé 512 se poursuit à l'autre extrémité par un cintrage 512c relié à une branche mobile 513 ayant globalement une forme de Z. Cette branche mobile 513 est reliée au fond 512 par la charnière réalisée dans la matière par le cintrage 512c. Du fait de sa forme en Z, cette branche 513 referme l'ouverture 514 de la pince 51 qui a pour dimension D par rapport à l'axe OY défini par la branche fixe 511.

La partie supérieure de la branche mobile 513 est reliée par un cintrage 513a à la boucle 52 composée d'une première branche droite 521 suivie d'un cintrage large 522 puis d'un segment 523 à très grand rayon de courbure se terminant par un retour 524 pratiquement perpendiculaire à l'extrémité de ce segment 523 ; la liaison est faite par un cintrage 523a.

Cette forme complexe de la boucle 52 lui permet d'assurer différentes fonctions importantes pour le montage du patin et le fonctionnement au freinage. En effet, comme le ressort radial est réalisé à partir d'un ruban en acier à ressort, ayant partout la même épaisseur, l'élasticité/raideur des articulations formées par les cintrages entre les différents segments dépend du rayon de courbure, l'élasticité étant globalement plus grande pour les forts rayons de courbure que pour les petits rayons de courbure.

Une telle forme de réalisation appliquant au moins proportionnellement les rapports des différents rayons de cintrage, permet au segment 523 d'assurer la fonction de patin guidant le coulissement de l'oreille 31 contre le dessous 22a du logement 22 ; le dessous 22a peut être constitué directement par le logement du bras ou par une pièce intermédiaire sur laquelle glisse le patin 523.

La boucle 52 a également pour fonction de soulever l'oreille 31 pour l'appuyer contre le côté supérieur (ou côté radial extérieur) 22b du logement (figure 1, figure 4) et la positionner par rapport à cette surface de référence par le jeu de l'élasticité du cintrage large 522 et du cintrage plus serré 513a. La boucle 52 constitue également un levier articulé élastiquement, élargissant légèrement, en fin de course complète, l'ouverture 514 de la pince 551 et facilitant la mise en place de la pince 51 sur l'oreille 31 sans que cela ne soit au détriment de la fermeté du serrage de la pince 51 sur l'oreille, évitant tout jeu de fonctionnement à ce niveau.

Cette mise en place est facilitée par l'extrémité évasée 511a de la branche 511.

La figure 4 montre en coupe une oreille 31 munie d'un ressort radial 5 appuyé par ailleurs sur la surface 22a du logement 22, le dessus de l'oreille 31 étant appliqué contre la surface supérieure 22b du logement. Elle souligne la tenue de l'oreille 31 par la branche droite 511 et le sommet 512b de l'ondulation du fond 512, le cintrage 513a de la forme en Z de la branche 513 s'appuyant localement contre l'autre face de l'oreille 31.

La figure 4 met aussi en évidence la forme de l'arrondi de la boucle 52 dont le cintrage 522 facilite l'introduction et le guidage de l'oreille 31 munie du ressort 5 au montage du patin entre les surfaces 22a, 22b du logement 22.

Globalement le ressort radial 5 selon l'invention améliore considérablement les conditions de montage.

A titre d'exemple, les rayons de courbure pour les différents cintrages sont les suivants :

| Cintrage | Rayon | Environ en mm |
|---|---|---|
| 512a | R1 | 1,5 |
| 512c | R2 | 1 |
| 513a | R3 | 2,5 |
| 522 | R4 | 4,5 |
| 523 | R5 | 20,0 |
| 523a | R6 | 2,5 |

Chacune des deux oreilles d'un patin de frein reçoit un ressort radial 5 tel que décrit ci-dessus et comme il y a deux patins de frein par frein à disque, le frein à disque ainsi équipé comporte quatre ressorts radiaux.

L'invention s'applique au domaine des freins à disque de véhicules automobiles.

### NOMENCLATURE DES ELEMENTS PRINCIPAUX

- 1: Disque de frein
- 2: Chape
20 Bras
21 Pontet
22 Logement du bras
   22a Dessous du logement
   22b Dessus du logement
- 3: Patin de frein
30 Support de garniture
31 Oreille
32 Garniture
- 4: Organe de guidage
- 5: Ressort radial
51 Pince
   511 Branche fixe
      511a Extrémité évasée
   512 Segment ondulé/fond de la pince
      512a Cintrage
      512b Sommet d'ondulation
      512c Cintrage
   513 Branche mobile en forme de Z
      513a Cintrage
52 Boucle d'appui
   521 Première branche droite
   522 Cintrage
   523 Patin formant levier
      523a Cintrage
   524 Retour

## Revendications

1. Ressort radial de patin de frein destiné à être glissé transversalement sur l'oreille (31) d'un patin (3) de frein à disque, le ressort formé par un ruban d'acier à ressort comportant des branches pour se fixer sur l'oreille et une partie d'appui, pour glisser contre la surface inférieure (224) du logement (22) du bras (20) de la chape (2),
ressort radial **caractérisé en ce qu'**il comprend
- une partie en forme de pince (51) pour chevaucher l'oreille (31) du patin, prolongée par une boucle d'appui (52) formant un patin pour glisser dans le logement (22) de la chape,
- la pince (51) ayant
* une branche fixe (511), droite, avec une extrémité évasée (511a) pour s'appuyer contre une face de l'oreille (31), suivie
* d'un segment (512) formant le fond de la pince, et
* une branche mobile (513) reliée au fond par une charnière (512c) élastique et refermant l'ouverture (514) de la pince (51),
- la boucle d'appui (52) formant le patin (523) étant terminée par un retour (524) et reliée par un double cintrage (513a, 522) à la branche mobile (513) pour contourner élastiquement le fond (512) et venir devant la branche droite (511) par le retour (524),
- le patin (523) formant un levier qui, ramené élastiquement contre le fond, agrandit l'ouverture (514) de la pince (51).

2. Ressort radial selon la revendication 1,
**caractérisé en ce que**
le fond (512) de la pince (51) est formé par une ondulation composée d'un premier cintrage (512a), concave par rapport à l'intérieur de la pince (51), suivie d'une ondulation convexe formant un sommet (512b) suivi d'un cintrage (512c) formant l'articulation avec la branche mobile (513),
le sommet (512b) constituant la surface d'appui de la pince contre le dessous de l'oreille (31).

3. Ressort radial selon la revendication 1,
**caractérisé en ce que**
la branche mobile (513) a une forme de Z englobant le cintrage (512c) reliant la branche (513) au fond (512) et le cintrage (513a) reliant l'autre extrémité de la branche mobile (513) à un segment droit (521) lui-même relié à l'autre cintrage (522) de la boucle (52).

4. Ressort radial selon la revendication 1,
**caractérisé en ce que**
le second cintrage (522) de la boucle d'appui (52) forme l'arrondi de guidage à l'avant du ressort radial installé sur l'oreille (31) du patin, pour l'introduction de l'oreille ainsi équipée dans le logement (22) du bras (20).

5. Ressort radial selon la revendication 1,
**caractérisé en ce que**
le patin (523) de la boucle d'appui (52) a une forme courbe avec un grand rayon de courbure.

6. Ressort radial selon la revendication 1,
**caractérisé en ce que**
le premier cintrage (513a) a un rayon de courbure (R3) sensiblement double du rayon (R1) du cintrage (512a) reliant le fond à la branche droite (511) de la pince (51) et du rayon (R2) du cintrage (512c) reliant la branche mobile (513) au fond (512) et le second cintrage (522) a un rayon (R4) sensiblement double du rayon du premier cintrage (513a) de la boucle (52).

7. Patin de frein à disque
**caractérisé en ce qu'**
il comporte à chaque oreille un ressort radial selon l'une quelconque des revendications 1 à 6, ce ressort radial comprenant :
- une partie en forme de pince (51) pour chevaucher l'oreille (31) du patin, prolongée par une boucle d'appui (52) formant un patin pour glisser dans le logement (22) de la chape,
- la pince (51) ayant
* une branche fixe (511), droite, avec une extrémité évasée (511a) pour s'appuyer contre une face de l'oreille (31), suivie
* d'un segment (512) formant le fond de la pince, et
* une branche mobile (513) reliée au fond par une charnière (512c) élastique et refermant l'ouverture (514) de la pince (51),
- la boucle d'appui (52) formant le patin (523) étant terminée par un retour (524) et reliée par un double cintrage (513a, 522) à la branche mobile (513) pour contourner élastiquement le fond (512) et venir devant la branche droite (511) par le retour (524),
- le patin (523) formant un levier qui, ramené élastiquement contre le fond, agrandit l'ouverture (514) de la pince (51).

8. Frein à disque
**caractérisé en ce qu'**
il est équipé de deux patins de frein (3) dont chaque oreille (31) est munie d'un ressort radial selon l'une quelconque des revendications 1 à 6.

## Patentansprüche

1. Radialfeder für einen Bremsbelag, die dazu bestimmt ist, quer auf die Öse (31) eines Scheibenbremsbelags (3) geschoben zu werden, wobei die Feder, die von einem Federstahlband gebildet wird, Arme zur Befestigung an der Öse und ein Stützteil zum Gleiten gegen die Innenfläche (224) der Aufnahme (22) des Gabelarms (20) der Gelenkgabel (2) aufweist,
wobei die Radialfeder **dadurch gekennzeichnet ist, dass** sie Folgendes umfasst:
- ein Teil in Form einer Klemme (51), um die Öse (31) des Belags zu überdecken, das durch einen Stützring (52) verlängert wird, der einen Belag bildet, um in die Aufnahme (22) der Gelenkgabel zu gleiten,
- wobei die Klemme (51) Folgendes hat:
* einen ortsfesten Arm (511), gerade, mit einem aufgeweiteten Ende (511a), um an einer Seite der Öse (31) anzuliegen, gefolgt von
* einem Segment (512), das den Boden der Klemme bildet, und
* einen beweglichen Arm (513), der mittels eines elastischen Gelenks (512c) mit dem Boden verbunden ist und die Öffnung (514) der Klemme (51) schließt,
- wobei der Stützring (52), der den Belag (523) bildet, in einer Rückführung (524) endet und mittels einer doppelten Krümmung (513a, 522) mit dem beweglichen Arm (513) verbunden ist, um elastisch um den Boden (512) herumzuführen und mittels der Rückführung (524) vor den geraden Arm (511) zu gelangen,
- wobei der Belag (523) einen Hebel bildet, der, wenn er erneut elastisch gegen den Boden bewegt wird, die Öffnung (514) der Klemme (51) vergrößert.

2. Radialfeder nach Anspruch 1,
**dadurch gekennzeichnet, dass**
der Boden (512) der Klemme (51) von einer Wellung gebildet wird, die aus einer ersten Krümmung (512a) besteht, die in Bezug auf das Innere der Klemme (51) konkav ist, gefolgt von einer konvexen Wellung, die eine Kuppe (512b) bildet, gefolgt von einer Krümmung (512c), die das Gelenk mit dem beweglichen Arm (513) bildet,
wobei die Kuppe (512b) die Auflagefläche der Klemme für die Unterseite der Öse (31) darstellt.

3. Radialfeder nach Anspruch 1,
**dadurch gekennzeichnet, dass**
der bewegliche Arm (513) eine Z-Form hat, die die Krümmung (512c), die den Arm (513) mit dem Boden (512) verbindet, und die Krümmung (513a), die das andere Ende des beweglichen Arms (513) mit einem geraden Segment (521) verbindet, das wiederum mit der anderen Krümmung (522) des Rings (52) verbunden ist, einschließt.

4. Radialfeder nach Anspruch 1,
**dadurch gekennzeichnet, dass**
die zweite Krümmung (522) des Stützrings (52) die Führungsrundung an der Vorderseite der an der Öse (31) des Belags installierten Radialfeder bildet, um die so ausgestattete Öse in die Aufnahme (22) des Arms (20) einzuführen.

5. Radialfeder nach Anspruch 1,
**dadurch gekennzeichnet, dass**
der Belag (523) des Stützrings (52) eine gekrümmte Form mit einem großen Krümmungsradius hat.

6. Radialfeder nach Anspruch 1,
**dadurch gekennzeichnet, dass**
die erste Krümmung (513a) einen Krümmungsradius (R3) hat, der im Wesentlichen doppelt so groß ist wie der Radius (R1) der Krümmung (512a), die den Boden mit dem geraden Arm (511) der Klemme (51) verbindet, und der Radius (R2) der Krümmung (512c), die den beweglichen Arm (513) mit dem Boden (512) verbindet, und die zweite Krümmung (522) einen Radius (R4) hat, der im Wesentlichen doppelt so groß ist wie der Radius der ersten Krümmung (513a) des Rings (52).

7. Bremsbelag für eine Scheibenbremse,
**dadurch gekennzeichnet, dass**
er an jeder Öse eine Radialfeder nach einem der Ansprüche 1 bis 6 aufweist, wobei diese Radialfeder Folgendes umfasst:
- ein Teil in Form einer Klemme (51), um die Öse (31) des Belags zu überdecken, das durch einen Stützring (52) verlängert wird, der einen Belag bildet, um in die Aufnahme (22) der Gelenkgabel zu gleiten,
- wobei die Klemme (51) Folgendes hat:
* einen ortsfesten Arm (511), gerade, mit einem aufgeweiteten Ende (511a), um an einer Seite der Öse (31) anzuliegen, gefolgt von
* einem Segment (512), das den Boden der Klemme bildet, und
* einen beweglichen Arm (513), der mittels eines elastischen Gelenks (512c) mit dem Boden verbunden ist und die Öffnung (514) der Klemme (51) schließt,
- wobei der Stützring (52), der den Belag (523) bildet, in einer Rückführung (524) endet und mittels einer doppelten Krümmung (513a, 522) mit dem beweglichen Arm (513) verbunden ist, um elastisch um den Boden (512) herumzuführen und mittels der Rückführung (524) vor den geraden Arm (511) zu gelangen,
- wobei der Belag (523) einen Hebel bildet, der, wenn er erneut elastisch gegen den Boden bewegt wird, die Öffnung (514) der Klemme (51) vergrößert.

8. Scheibenbremse,
**dadurch gekennzeichnet, dass**
sie mit zwei Bremsbelägen (3) ausgestattet ist, deren Ösen (31) jeweils mit einer Radialfeder nach einem der Ansprüche 1 bis 6 versehen sind.

## Claims

1. Brake pad radial spring intended to be slipped transversely over the ear (31) of a disc-brake pad (3), the spring formed by a spring steel strip comprising branches to fix onto the ear and a bearing part, to slip against the lower surface (224) of the housing (22) in the arm (20) of the carrier (2),
the radial spring being **characterized in that** it comprises
- a clip-shaped part (51) to straddle the ear (31) of the pad, this part being extended by a bearing loop (52) forming a skid to slide in the housing (22) in the carrier,
- the clip (51) having
* a straight fixed branch (511), with a flared end (511a) to bear against one face of the ear (31), followed
* by a segment (512) that forms the bottom of the clip, and
* a mobile branch (513) connected to the bottom via an elastic hinge (512c) and closing the opening (514) of the clip (51),
- the bearing loop (52) that forms the skid (523) ending in a return (524) and being connected by a double bow (513a, 522) to the mobile branch (513) so as to pass elastically around the bottom (512) and have the return (524) come up in front of the straight branch (511),
- the skid (523) forming a lever which, returned elastically against the bottom, widens the opening (514) of the clip (51).

2. Radial spring according to Claim 1, **characterized in that** the bottom (512) of the clip (51) is formed of an undulation made up of a first bow (512a), that is concave with respect to the inside of the clip (51), followed by a convex undulation forming a vertex (512b), followed by a bow (512c) forming the articulation with the mobile branch (513), the vertex (512b) constituting the bearing surface via which the clip bears against the underneath of the ear (31).

3. Radial spring according to Claim 1, **characterized in that** the mobile branch (513) has the shape of a Z encompassing the bow (512c) connecting the branch (513) to the bottom (512) and the bow (513a) connecting the other end of the mobile branch (513) to a straight segment (521) itself connected to the other bow (522) of the loop (52).

4. Radial spring according to Claim 1, **characterized in that** the second bow (522) of the bearing loop (52) forms the rounded guide feature at the front of the radial spring installed on the ear (31) of the pad, so that the ear thus equipped can be introduced into the housing (22) in the arm (20).

5. Radial spring according to Claim 1, **characterized in that** the skid (523) of the bearing loop (52) has a curved shape with a large radius of curvature.

6. Radial spring according to Claim 1, **characterized in that** the first bow (513a) has a radius of curvature (R3) substantially twice the radius (R1) of the bow (512a) connecting the bottom of the right branch (511) to the clip (51) and substantially twice the radius (R2) of the bow (512c) connecting the mobile branch (513) to the bottom (512), and the second bow (522) has a radius (R4) substantially twice the radius of the first bow (513a) of the loop (52).

7. Disc-brake pad, **characterized in that** it comprises for each ear a radial spring according to any one of Claims 1 to 6, this radial spring comprising:
- a clip-shaped part (51) to straddle the ear (31) of the pad, this part being extended by a bearing loop (52) forming a skid to slide in the housing (22) in the carrier,
- the clip (51) having
* a straight fixed branch (511), with a flared end (511a) to bear against one face of the ear (31), followed
* by a segment (512) that forms the bottom of the clip, and
* a mobile branch (513) connected to the bottom via an elastic hinge (512c) and closing the opening (514) of the clip (51),
- the bearing loop (52) that forms the skid (523) ending in a return (524) and being connected by a double bow (513a, 522) to the mobile branch (513) so as to pass elastically around the bottom (512) and have the return (524) come up in front of the straight branch (511),
- the skid (523) forming a lever which, returned elastically against the bottom, widens the opening (514) of the clip (51).

8. Disc brake, **characterized in that** it is fitted with two brake pads (3) of which each ear (31) is equipped with a radial spring according to any one of Claims 1 to 6.
